# EUROPÄISCHE PATENTSCHRIFT

(11) **EP 3 018 311 B1**
(45) Veröffentlichungstag und Bekanntmachung des Hinweises auf die Patenterteilung: **13.09.2017**
(21) Anmeldenummer: 15192279.6
(22) Anmeldetag: 30.10.2015
(51) Int. Cl.: F01N 3/20, F01N 3/021, F01N 3/10, F01N 3/28, F01N 13/00, B01D 53/94, B01F 3/04, B01F 5/04, B01F 5/06

(54) **INJEKTIONSABSCHNITT FÜR EINE ABGASNACHBEHANDLUNGSEINRICHTUNG**
INJECTION SECTION FOR AN EXHAUST GAS AFTERTREATMENT DEVICE
SECTION D'INJECTION POUR UN DISPOSITIF DE POST-TRAITEMENT DE GAZ D'ÉCHAPPEMENT

(30) Priorität: 06.11.2014 DE 102014222698
(43) Veröffentlichungstag der Anmeldung: 11.05.2016
(73) Patentinhaber: Eberspächer Exhaust Technology GmbH & Co. KG, 66539 Neunkirchen (DE)
(72) Erfinder: Kauderer, Alexander, 73329 Kuchen (DE); Wolf, Tobias, 73257 Köngen (DE); Karelin, Kirill, 71034 Böblingen (DE)
(74) Vertreter: BRP Renaud & Partner mbB Rechtsanwälte Patentanwälte Steuerberater

(56) Entgegenhaltungen:
- WO-A1-2012/089290
- WO-A1-2014/195393
- JP-A- 2012 225 316
- US-A1- 2009 000 287

## Beschreibung

Die vorliegende Erfindung betrifft einen Injektionsabschnitt einer Abgasanlage für eine Brennkraftmaschine, mit den Merkmalen des Oberbegriffs des Anspruchs 1. Die Erfindung betrifft außerdem eine mit einem derartigen Injektionsabschnitt ausgestattete Abgasnachbehandlungseinrichtung für eine Abgasanlage einer Brennkraftmaschine.

Ein Injektionsabschnitt ist grundsätzlich aus der WO 2015/059145 A1 bekannt. Er umfasst einen Kanal zum Führen einer Abgasströmung sowie einen seitlich am Kanal angeordneten Injektoranschluss, an den ein Injektor zum Einbringen eines Fluids, also einer Flüssigkeit oder eines Gases in die Abgasströmung anschließbar ist. Ferner ist im Kanal im Bereich des Injektoranschlusses eine Injektionskammer ausgebildet, die einerseits durch eine bezüglich der Abgasströmung stromauf des Injektoranschlusses im Kanal angeordnete, perforierte und von Abgas durchströmbare erste Trennwand und andererseits durch eine bezüglich der Abgasströmung stromab des Injektoranschlusses im Kanal angeordnete, perforierte und von Abgas durchströmbare zweite Trennwand begrenzt ist. Beim bekannten Injektionsabschnitt ist eine Perforation der ersten Trennwand so ausgestaltet, dass sie bei einer Durchströmung der ersten Trennwand innerhalb der Injektionskammer wenigstens zwei Abgasteilströme erzeugt, die zwei gegenläufige Strömungswirbel ausbilden. Ferner wird durch die Ausgestaltung der Perforation der ersten Trennwand erreicht, dass die beiden Abgasteilströme proximal zu einer die Injektionskammer seitlich begrenzenden Kanalwand separat strömen und distal zur Kanalwand gemeinsam strömen. Hierdurch wird eine intensive Verwirbelung innerhalb der Injektionskammer erreicht. Gleichzeitig wird eine vergleichsweise hohe Verweildauer für das Abgas innerhalb der Injektionskammer erreicht. Insgesamt kann dadurch eine verbesserte Durchmischung zwischen Abgas und eingebrachter Flüssigkeit bzw. eingebrachtem Gas erzielt werden.

Sofern eine Flüssigkeit eingebracht wird, kann durch diese Maßnahme außerdem eine verbesserte Verdampfung der Flüssigkeit erreicht werden.

Aus der WO 2010/146285 A1 ist eine Abgasnachbehandlungseinrichtung in Form einer SCR-Anlage bekannt, wobei SCR für Selective Catalytic Reduction steht. Die bekannte SCR-Anlage weist ein rohrförmiges Gehäuse zum Führen einer Abgasströmung auf, das in einem Auslassabschnitt einen SCR-Katalysator enthält. Das Gehäuse weist außerdem einen Einlassabschnitt auf, der bezüglich der Abgasströmung stromauf des Auslassabschnitts angeordnet ist und der einen Oxidationskatalysator enthält. Axial zwischen dem Einlassabschnitt und dem Auslassabschnitt ist ein Injektionsabschnitt angeordnet, wobei ein integral am Einlassabschnitt ausgebildeter weiterer Gehäuseabschnitt einen Kanal des Injektionsabschnitts definiert, der ebenfalls zum Führen der Abgasströmung dient. Im Injektionsabschnitt ist seitlich am Kanal ein Injektoranschluss angeordnet, an den ein Injektor zum seitlichen Einspritzen oder Eindüsen einer Flüssigkeit bzw. eines Gases in die Abgasströmung angeschlossen ist. Im Kanal der Injektionskammer ist im Bereich des Injektoranschlusses eine Injektionskammer ausgebildet, die einerseits durch eine bezüglich der Abgasströmung stromauf des Injektoranschlusses im Kanal angeordnete, perforierte und von Abgas durchströmbare erste Trennwand und andererseits durch eine bezüglich der Abgasströmung stromab des Injektoranschlusses im Kanal angeordnete, perforierte und von Abgas durchströmbare zweite Trennwand begrenzt ist. Bei der bekannten SCR-Anlage sind die beiden Trennwände in Verbindung mit ihren Perforationen so ausgestaltet bzw. geformt, dass sich im Betrieb der Abgasanlage in der Injektionskammer eine Drall- bzw. Wirbel- bzw. Rotationsströmung ausbildet, bei der die gesamte Abgasströmung um die Längsmittelachse des Kanals rotiert. Hierdurch wird erreicht, dass ein Strömungspfad in der Injektionskammer, dem die Abgasströmung von der Perforation der ersten Trennwand bis zur Perforation der zweiten Trennwand folgt, um wenigstens 20% länger ist als ein Axialabstand zwischen Einlassabschnitt und Auslassabschnitt. Hierdurch wird eine Mischstrecke geschaffen, in der eine eingespritzte Flüssigkeit verdampfen und sich mit der Abgasströmung durchmischen kann. Allerdings erzeugt eine Drallströmung häufig einen erhöhten Strömungswiderstand bzw. Gegendruck in der Abgasanlage.

Eine andere SCR-Anlage, bei der ebenfalls ein Injektionsabschnitt zum Einbringen von Reduktionsmittel in den Abgasstrom zum Einsatz kommt, ist z.B. aus der WO 2014/195393 A1 bekannt. Dieses Dokument fällt unter Artikel 54(3) EPÜ.

Bei einem SCR-System handelt es sich bei der eingespritzten Flüssigkeit um ein Reduktionsmittel. Bevorzugt wird hierbei derzeit eine wässrige Harnstofflösung, die mittels Thermolyse und Hydrolyse letztlich zu Ammoniak und Kohlendioxid umgewandelt wird, um im SCR-Katalysator angelagerte Stickoxide in Stickstoff und Wasser umzuwandeln. Von entscheidender Bedeutung für die Effizienz eines derartigen SCR-Systems ist einerseits eine möglichst vollständige Verdampfung des in flüssiger Form eingebrachten Reduktionsmittels. Andererseits muss auch eine möglichst intensive Durchmischung des verdampften Reduktionsmittels mit dem Abgasstrom erzielt werden.

Alternativ kann bei modernen SCR-Systemen auch ein gasförmiges Reduktionsmittel eingedüst werden, bei dem es sich beispielsweise um gasförmiges Ammoniak handelt. Die Bevorratung kann in diesem Fall in Form von Feststoffkörpern erfolgen, die mittels, beispielsweise elektrisch zugeführter, Wärme verdampft werden, um das gasförmige Ammoniak zu generieren. Bei diesen sogenannten Amminex-Systemen steht das Ammoniak somit im Abgasstrom unmittelbar zur Verfügung, so dass es nur noch auf eine intensive Durchmischung mit dem Abgasstrom ankommt, da die Verdampfung bereits im Vorfeld, außerhalb des Abgasstroms erfolgt.

Ein gattungsgemäßer Injektionsabschnitt ist aus der US 2009/0000287 A1 bekannt. Dort ist eine Perforation der ersten Trennwand mithilfe von in der Umfangrichtung gebogenen Rohrabschnitten so ausgestaltet, dass die erste Trennwand bezüglich einer Längsmittelachse des Kanals ausschließlich exzentrisch von Abgas durchströmbar ist, so dass ein eintretender Hauptteil der Abgasströmung exzentrisch in die Injektionskammer eintritt. Ferner ist dort vorgesehen, dass die zweite Trennwand durch eine zentral offene Blende gebildet ist, so dass die zweite Trennwand durch diese Perforation bezüglich der Längsmittelachse des Kanals ausschließlich zentrisch von Abgas durchströmbar ist, so dass ein austretender Hauptteil der Abgasströmung zentrisch aus der Injektionskammer austritt.

Die vorliegende Erfindung beschäftigt sich mit dem Problem, für einen Injektionsabschnitt der vorstehend genannten Art bzw. für eine damit ausgestattete Abgasnachbehandlungseinrichtung eine verbesserte Ausführungsform anzugeben, die sich insbesondere durch eine effiziente Durchmischung für das eingespritzte Fluid mit der Abgasströmung auszeichnet und die sich außerdem durch eine effiziente Verdampfungswirkung auszeichnet, sofern es sich beim eingespritzten Fluid um eine Flüssigkeit handelt.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, durch eine geeignete Auswahl und/oder Anordnung einer Perforation der ersten Trennwand und einer Perforation der zweiten Trennwand innerhalb der Injektionskammer eine intensive Strömungsumlenkung zu erzeugen, die für eine effiziente Durchmischung und gegebenenfalls Verdampfung des eingespritzten Fluids sorgt. Erreicht wird dies einerseits dadurch, dass die Perforation der ersten Trennwand so ausgestaltet ist, dass die erste Trennwand bezüglich einer Längsmittelachse des Kanals, die der Kanal zumindest im Bereich der Injektionskammer besitzt, ausschließlich oder zumindest im Wesentlichen exzentrisch vom Abgas durchströmbar ist, so dass eine Abgasströmung ausschließlich oder zumindest im Wesentlichen exzentrisch durch die erste Trennwand in die Injektionskammer eintritt. Durch dieses hauptsächlich exzentrisch erfolgende Einströmen des Abgases in die Injektionskammer, weist die Abgasströmung einen eintretenden Hauptteil auf. Der eintretende Hauptteil der Abgasströmung umfasst jedenfalls mehr als 50% des gesamten Volumenstroms der Abgasströmung. Vorzugsweise umfasst der eintretende Hauptteil der Abgasströmung mindestens 75% und insbesondere mindestens 90% des gesamten Volumenstroms der Abgasströmung. Ebenso ist denkbar, dass der eintretende Hauptteil der Abgasströmung 100% des Volumenstroms der Abgasströmung ausmacht, so dass der eintretende Hauptteil durch die gesamte Abgasströmung gebildet ist. Erreicht wird dies beispielsweise durch eine entsprechende weitgehend oder ausschließlich exzentrische Anordnung der Perforation in der ersten Trennwand.

Andererseits wird die intensive Strömungsumlenkung zur effizienten Durchmischung bzw. Verdampfung in der Injektionskammer dadurch erreicht, dass die Perforation der zweiten Trennwand so ausgestaltet ist, dass die zweite Trennwand bezüglich der Längsmittelachse des Kanals ausschließlich oder zumindest im Wesentlichen zentrisch von Abgas durchströmbar ist, so dass ein Abgasstrom ausschließlich oder zumindest im Wesentlichen axial durch die zweite Trennwand aus der Injektionskammer austritt. Durch dieses hauptsächlich exzentrisch erfolgende Ausströmen des Abgases aus der Injektionskammer, weist die Abgasströmung einen austretenden Hauptteil auf. Der austretende Hauptteil der Abgasströmung umfasst jedenfalls mehr als 50% des gesamten Volumenstroms der Abgasströmung. Vorzugsweise umfasst der austretende Hauptteil der Abgasströmung mindestens 75% und insbesondere mindestens 90% des gesamten Volumenstroms der Abgasströmung. Ebenso ist denkbar, dass der austretende Hauptteil der Abgasströmung 100% des Volumenstroms der Abgasströmung ausmacht, so dass der austretende Hauptteil durch die gesamte Abgasströmung gebildet ist. Hierzu wird diese Perforation weitgehend oder ausschließlich zentrisch in der zweiten Trennwand angeordnet.

Der jeweilige eintretende bzw. austretende Hauptteil der Abgasströmung kann dabei je nach Ausgestaltung der Perforation der jeweiligen Trennwand einteilig oder mehrteilig sein, also entweder aus einem einzigen Strom oder aus mehreren Teilströmen bestehen. Vorzugsweise ist der exzentrisch eintretende Hauptteil mehrteilig, während der zentrisch austretende Hauptstrom einteilig ist. Sofern der jeweilige Hauptteil der Abgasströmung nicht durch die gesamte Abgasströmung gebildet ist, existiert auch ein eintretender Nebenteil bzw. ein austretender Nebenteil der Abgasströmung, wobei auch hier vorgesehen sein kann, dass der jeweilige Nebenteil einteilig oder mehrteilig sein kann.

Durch die erfindungsgemäße Bauform wird somit erreicht, dass die Abgasströmung bezüglich der Längsmittelachse des Kanals hauptsächlich exzentrisch in die Injektionskammer eintritt und hauptsächlich zentrisch aus der Injektionskammer austritt. Hierdurch muss die Abgasströmung innerhalb der Injektionskammer von einem exzentrischen Zuströmbereich in einen zentrischen Abströmbereich mehrfach umgelenkt und konvergiert werden. Hierbei kommt es zu einer intensiven Durchmischung mit ausreichender Verweildauer für eine intensive Verdampfung.

Neben einer ausschließlich exzentrischen bzw. zentrischen Durchströmung der jeweiligen Trennwand kommt auch eine im Wesentlichen exzentrische bzw. zentrische Durchströmung der jeweiligen Trennwand in Betracht, was einer weitgehenden oder bevorzugten exzentrischen bzw. zentrischen Durchströmung der jeweiligen Trennwand entspricht. Unter einer "im Wesentlichen exzentrischen" Durchströmung der ersten Trennwand ist somit eine Durchströmung der ersten Trennwand zu verstehen, bei der mehr als 50%, vorzugsweise mindestens 75% und insbesondere mindestens 90% des gesamten, die erste Trennwand durchströmenden Volumenstroms der Abgasströmung die erste Trennwand exzentrisch durchströmt. Unter einer "im Wesentlichen zentrischen" Durchströmung der zweiten Trennwand ist dann eine Durchströmung der zweiten Trennwand zu verstehen, bei der mehr als 50%, vorzugsweise mindestens 75% und insbesondere mindestens 90% des gesamten, die zweite Trennwand durchströmenden Volumenstroms der Abgasströmung die zweite Trennwand zentrisch durchströmt. Bevorzugt ist jedoch eine Ausführungsform, bei der die erste Trennwand nur exzentrisch durchströmbar ist, also ausschließlich eine exzentrische Perforation aufweist, und/oder bei der die zweite Trennwand nur zentrisch durchströmbar ist, also ausschließlich eine zentrische Perforation aufweist.

Wie erwähnt ist der Injektoranschluss seitlich am Kanal angebracht. Hierdurch kann bei entsprechender Anordnung des Injektors insbesondere eine seitliche Einspritzung des jeweiligen Fluids erzielt werden. Bei einer seitlichen Einspritzung des Fluids ist eine Haupteinspritzrichtung gegenüber einer Axialrichtung des Kanals geneigt, vorzugsweise in einem Winkelbereich von 60° bis 120°, insbesondere in einem Winkelbereich von 85° bis 95° und zweckmäßig um etwa 90°.

Gemäß einer bevorzugten Ausführungsform kann die Perforation der ersten Trennwand außerdem so ausgestaltet sein, dass die erste Trennwand bezüglich der Längsmittelachse des Kanals bevorzugt oder ausschließlich axial von Abgas durchströmbar ist, so dass durch die Durchströmung der Perforation selbst keine oder keine nennenswerte Strömungsumlenkung erfolgt. Insgesamt kann somit der eintretende Hauptteil der Abgasströmung exzentrisch und axial in die Injektionskammer eintreten. Insbesondere lässt sich dadurch die Durchströmung der Injektionskammer so gestalten, dass sich darin keine um die Längsmittelachse des Kanals rotierende Drallströmung ausbildet. Mit anderen Worten, die Perforation der ersten Trennwand kann so ausgestaltet sein, dass die erste Trennwand bezüglich der Längsmittelachse des Kanals drallfrei durchströmbar ist.

Zusätzlich oder alternativ kann vorgesehen sein, dass die Perforation der zweiten Trennwand außerdem so ausgestaltet ist, dass die zweite Trennwand bezüglich der Längsmittelachse des Kanals bevorzugt oder ausschließlich axial von Abgas durchströmbar ist, so dass durch die Durchströmung der Perforation selbst keine oder keine nennenswerte Strömungsumlenkung erfolgt. Insgesamt kann somit der austretende Hauptteil der Abgasströmung zentrisch und axial aus der Injektionskammer austreten. Mit anderen Worten, die Perforation der zweiten Trennwand kann so ausgestaltet sein, dass die zweite Trennwand bezüglich der Längsmittelachse des Kanals drallfrei durchströmbar ist.

Allgemein ausgedrückt sind die Perforationen der ersten und zweiten Trennwand erfindungsgemäß so aufeinander abgestimmt, dass die Abgasströmung in der Injektionskammer bezüglich der Längsmittelachse des Kanals drallfrei ist, was der Entstehung eines erhöhten Abgasgegendrucks entgegenwirkt.

Gemäß einer vorteilhaften Weiterbildung ist vorgesehen, dass die Durchströmung der jeweiligen Trennwand innerhalb der jeweiligen Perforation ausschließlich axial erfolgt. Eine Strömungsumlenkung erfolgt somit jeweils ausschließlich stromauf und/oder stromab der jeweiligen Trennwand.

Gemäß einer vorteilhaften Ausführungsform kann die exzentrische Perforation der ersten Trennwand in einer Projektion parallel zur Längsmittelachse des Kanals vollständig außerhalb der zentrischen Perforation der zweiten Trennwand angeordnet sein. Das bedeutet, dass sich die Perforationen der beiden Trennwände in einer Axialprojektion nicht überlappen, so dass eine ablenkungsfreie, axiale Durchströmung der Injektionskammer nicht möglich ist. Somit wird die Mehrfachumlenkung für die gesamte Abgasströmung erzwungen.

Gemäß einer vorteilhaften Ausführungsform kann die zweite Trennwand axial fluchtend zur Perforation der ersten Trennwand eine exzentrisch zur Längsmittelachse des Kanals angeordnete Prallfläche aufweisen. Somit prallt die in die Injektionskammer eintretende Abgasströmung axial gegen die Prallfläche, an der die Strömungsumlenkung erfolgt. Die Prallfläche kann gleichzeitig als Verdunstungsfläche für eingespritzte Flüssigkeit dienen, die sich an der Prallfläche niederschlagen kann. Durch die intensive Beaufschlagung der Prallfläche durch die eintretende Abgasströmung wird dabei eine effiziente Verdampfung erzeugt.

Besonders vorteilhaft ist eine Weiterbildung, bei welcher die zweite Trennwand zur ersten Trennwand hin konvex gewölbt ist. Da die eintretende Abgasströmung exzentrisch auf die konvex gewölbte zweite Trennwand trifft, insbesondere auf die vorstehend genannte Prallfläche, erfolgt eine Ablenkung der Strömung radial nach außen, also in Richtung einer die Injektionskammer seitlich begrenzenden Kanalwand. An dieser erfolgt eine weitere Umlenkung der Strömung in Umfangsrichtung des Kanals. Insgesamt lässt sich somit eine intensive Durchmischung erzeugen.

Bei einer anderen Ausführungsform kann die Perforation der ersten Trennwand zumindest eine exzentrisch angeordnete Öffnung aufweisen, die von einem in die Injektionskammer vorstehenden Kragen eingefasst ist. Der Kragen bewirkt eine axiale Strömungsausrichtung. Ferner kann der Kragen als Düse konfiguriert sein und einen in Strömungsrichtung konvergierenden Querschnitt besitzen. Der Kragen kann zumindest an einer dem Injektoranschluss zugewandten Seite hinsichtlich seiner in der Axialrichtung gemessenen Länge so groß dimensioniert sein, dass ein Sprühkegel des durch den Injektor eingesprühten Fluids von außen gegen den Kragen trifft, nicht jedoch durch die exzentrische Öffnung hindurch aus dem Injektionsraum austreten kann.

Zusätzlich oder alternativ kann vorgesehen sein, dass die Perforation der ersten Trennwand zumindest eine exzentrisch angeordnete Öffnung aufweist, die als sich in Umfangsrichtung des Kanals erstreckendes Langloch ausgestaltet ist. Auf diese Weise kann für die exzentrische Öffnung ein vergleichsweise großer Öffnungsquerschnitt realisiert werden. Bevorzugt kommen die vorstehend genannten Merkmale kombiniert zur Anwendung, so dass die als Langloch ausgestaltete Öffnung außerdem einen in die Injektionskammer vorstehenden Kragen aufweisen kann.

Bevorzugt ist vorgesehen, dass die Perforation der ersten Trennwand ausschließlich durch zwei exzentrisch angeordnete Öffnungen gebildet ist, nämlich durch eine erste Öffnung und eine zweite Öffnung, die sich bezüglich der Längsmittelachse diametral gegenüberliegen. Die beiden Öffnungen können jeweils mit einem in die Injektionskammer vorstehenden Kragen ausgestattet sein und/oder jeweils als sich in Umfangsrichtung erstreckendes Langloch ausgestaltet sein. Durch die beiden Öffnungen wird die Strömung in der Injektionskammer auch in der Umfangsrichtung umgelenkt, was eine intensive Durchmischung begünstigt.

Besonders vorteilhaft ist es, wenn die beiden Öffnungen mit dem Injektoranschluss in einer Längsmittelebene liegen, in der auch die Längsmittelachse liegt. In diesem Fall ist dann die eine exzentrische Öffnung proximal zum Injektoranschluss angeordnet und kann auch als proximale Öffnung bezeichnet werden, während die andere exzentrische Öffnung dann distal zum Injektoranschluss angeordnet ist und als distale Öffnung bezeichnet werden kann. Abgas, das durch die distale Öffnung in die Injektionskammer eindringt, wird in der Injektionskammer dann zwangsläufig in Richtung zum Injektoranschluss umgelenkt, so dass das Abgas in diesem Bereich der Injektionskammer dem eingespritzten Fluid entgegenströmt. Dies führt zu einer intensiven Durchmischung.

Besonders vorteilhaft ist eine Weiterbildung, bei welcher die distale Öffnung einen größeren Öffnungsquerschnitt aufweist als die proximale Öffnung. Somit wird der Anteil der Gasströmung, der in der Injektionskammer dem eingespritzten Fluid entgegenströmt, vergrößert, was ebenfalls die Durchmischung verbessert. Gleichzeitig wird bei der proximalen Öffnung durch den reduzierten Öffnungsquerschnitt eine erhöhte Strömungsgeschwindigkeit erzielt, mit der das Abgas durch die proximale Öffnung in die Injektionskammer einströmt. Dies unterstützt eine Ablenkung des eingespritzten Fluids gegen die zweite Trennwand, insbesondere gegen deren Prallfläche.

Ferner kann auch hier vorgesehen sein, dass die proximale Öffnung und die distale Öffnung jeweils von einem Kragen eingefasst sind, die hinsichtlich ihrer Länge an den Sprühkegel angepasst sein können. Zweckmäßig ist dann der Kragen der distalen Öffnung zumindest ein einer dem Injektoranschluss zugewandten Seite länger als der Kragen der proximalen Öffnung.

Gemäß einer anderen Ausführungsform kann die Perforation der zweiten Trennwand wenigstens eine zentral angeordnete Öffnung aufweisen, die von einem von der Injektionskammer weg gerichteten abstehenden Kragen eingefasst ist. Auch hier kann eine axiale Ausrichtung der aus der Injektionskammer austretenden Abgasströmung realisiert werden. Auch kann der Kragen hier eine Düsenkontur aufweisen, die sich durch einen in der Strömungsrichtung konvergierenden Querschnitt auszeichnet.

Gemäß einer anderen Ausführungsform kann vorgesehen sein, dass die Perforation der zweiten Trennwand ausschließlich durch eine einzige zentrisch angeordnete zentrale Öffnung gebildet ist. Auf diese Weise wird die gesamte Abgasströmung gezwungen, die Injektionskammer durch diese eine zentrale Öffnung zu verlassen.

Bei einer anderen Ausführungsform kann im Kanal bezüglich der Abgasströmung stromab der Injektionskammer eine Umlenkkammer ausgebildet sein, die einerseits bezüglich der Abgasströmung stromauf durch die zweite Trennwand und andererseits durch eine im Kanal bezüglich der Abgasströmung stromab angeordnete, perforierte und von Abgas durchströmbare dritte Trennwand begrenzt ist. Mit Hilfe dieser Umlenkkammer wird eine weitere Strömungsumlenkung erzwungen, was die Homogenisierung des eingespritzten Fluids mit der Abgasströmung begünstigt. Auch kann in der Umlenkkammer gegebenenfalls eine weitere Verdampfung der eingespritzten Flüssigkeit begünstigt werden, insbesondere kann hierzu die dritte Trennwand in ihrem zentralen Bereich als Prallwand zur Unterstützung der Verdampfung von im Abgasstrom mitgeführten Flüssigkeitstropfen dienen.

Besonders vorteilhaft ist dabei eine Weiterbildung, bei welcher eine Perforation der dritten Trennwand so ausgestaltet ist, dass die dritte Trennwand bezüglich der Längsmittelachse des Kanals exzentrisch und ausschließlich oder im Wesentlichen axial von Abgas durchströmbar ist. Das bedeutet, dass das Abgas von der Injektionskammer durch die zweite Trennwand zentral in die Umlenkkammer einströmt und durch die Perforation der dritten Trennwand exzentrisch und zumindest weitgehend axial aus der Umlenkkammer ausströmt. In der Folge muss auch in der Umlenkkammer eine intensive Strömungsumlenkung erfolgen, was mit einer intensiven Durchmischung einhergeht.

Zweckmäßig weist die Perforation der dritten Trennwand zumindest eine exzentrisch angeordnete Öffnung auf. Diese kann optional einen von der Umlenkkammer weg gerichtet abstehenden Kragen aufweisen. Der Kragen führt zu einer axialen Ausrichtung der aus der Umlenkkammer austretenden Strömung. Ferner kann der Kragen als Düse konfiguriert sein und einen in Strömungsrichtung konvergierenden Querschnitt besitzen. Zusätzlich oder alternativ kann die jeweilige exzentrische Öffnung der dritten Trennwand optional als sich in Umfangsrichtung des Kanals erstreckendes Langloch ausgestaltet sein, so dass auch hier bei exzentrischer Anordnung ein vergleichsweise großer Öffnungsquerschnitt erzielbar ist.

Sofern die Perforation der dritten Trennwand mehrere exzentrisch angeordnete Öffnungen aufweist, sind diese vorzugsweise in der Umfangsrichtung des Kanals gleichmäßig verteilt angeordnet.

Bei einer anderen Ausführungsform kann die Perforation der dritten Trennwand außerdem so ausgestaltet sein, dass die dritte Trennwand bezüglich der Längsmittelachse des Kanals zusätzlich auch zentrisch von Abgas durchströmbar ist. Zweckmäßig ist dabei ein die dritte Trennwand zentrisch durchströmender Anteil der Abgasströmung kleiner als ein die dritte Trennwand exzentrisch durchströmender Anteil der Abgasströmung. Beispielsweise beträgt der die dritte Trennwand zentrisch durchströmender Anteil maximal ein Drittel, vorzugsweise maximal ein Viertel der gesamten Abgasströmung, jeweils bezogen auf den Volumenstrom. Die zentrisch angeordnete Perforation führt zu einer signifikanten Reduzierung des Durchströmungswiderstands des Injektionsabschnitts. Außerdem unterstützt die zentrische Durchströmbarkeit der dritten Trennwand eine Homogenisierung der Abgasströmung stromab der dritten Trennwand.

Gemäß einer anderen vorteilhaften Ausführungsform kann der Injektionsabschnitt mit einem Rohrstück ausgestattet sein, das den Kanal und die Injektionskammer und soweit vorhanden auch die Umlenkkammer enthält. Im Rohrstück sind somit die erste Trennwand und die zweite Trennwand angeordnet. Ist außerdem die Umlenkkammer vorgesehen, ist auch die dritte Trennwand im Rohrstück angeordnet. Ferner weist das Rohrstück den Injektoranschluss auf. Bezüglich einer Abgasnachbehandlungseinrichtung, in die der Injektionsabschnitt eingebaut werden kann, ist das Rohrstück als separates Bauteil konfiguriert, so dass der Injektionsabschnitt bezüglich der Abgasnachbehandlungseinrichtung eine separate Einheit bildet. Beispielsweise kann der Injektionsabschnitt somit als vormontierbare Baugruppe konzipiert sein, die bei Bedarf in eine entsprechende Abgasnachbehandlungseinrichtung eingebaut werden kann.

Eine erfindungsgemäße Abgasnachbehandlungseinrichtung, die sich für eine Verwendung in einer Abgasanlage einer Brennkraftmaschine eignet, umfasst ein rohrförmiges Gehäuse zum Führen einer Abgasströmung, das in einem Auslassabschnitt einen SCR-Katalysator enthält. Außerdem ist die Abgasnachbehandlungseinrichtung mit einem Injektionsabschnitt der vorstehend beschriebenen Art ausgestattet, der bezüglich der Abgasströmung stromauf des SCR-Katalysators angeordnet ist. Zweckmäßig bildet der Injektionsabschnitt dabei einen Bestandteil des Gehäuses. Insbesondere bildet das vorstehend genannte Rohrstück des Injektionsabschnitts einen solchen Gehäusebestandteil. Das Gehäuse kann außerdem einen Einlassabschnitt aufweisen, der bezüglich der Abgasströmung stromauf des Injektionsabschnitts angeordnet ist, und darin einen Partikelfilter enthalten. Zusätzlich oder alternativ kann im Einlassabschnitt ein Oxidationskatalysator angeordnet sein. Sofern sowohl ein Oxidationskatalysator als auch ein Partikelfilter im Einlassabschnitt angeordnet sind, befindet sich der Oxidationskatalysator stromauf des Partikelfilters. Zusätzlich oder alternativ kann im Auslassabschnitt zwischen dem Injektionsabschnitt und dem SCR-Katalysator eine Beruhigungskammer ausgebildet sein, die letztlich durch einen Axialabstand zwischen dem Injektionsabschnitt und dem SCR-Katalysator gebildet sein kann. Dieser Axialabstand kann dabei etwa oder mindestens gleich groß sein wie ein Durchmesser des vorzugsweise zylindrischen Gehäuses. Der SCR-Katalysator kann durch mehrere SCR-Katalysatorelemente gebildet sein, die in der Strömungsrichtung hintereinander angeordnet sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen Längsschnitt einer Abgasnachbehandlungseinrichtung,
- Fig. 2: eine isometrische Ansicht der Abgasnachbehandlungseinrichtung,
- Fig. 3: eine isometrische Ansicht eines Injektionsabschnitts der Abgasnachbehandlungseinrichtung,
- Fig. 4: ein Längsschnitt des Injektionsabschnitts,
- Fig. 5: ein Längsschnitt des Injektionsabschnitt wie in Fig. 4, jedoch mit Strömungspfeilen,
- Fig. 6: eine isometrische Ansicht einer ersten Trennwand,
- Fig. 7: eine isometrische Ansicht einer zweiten Trennwand,
- Fig. 8: eine isometrische Ansicht einer dritten Trennwand.

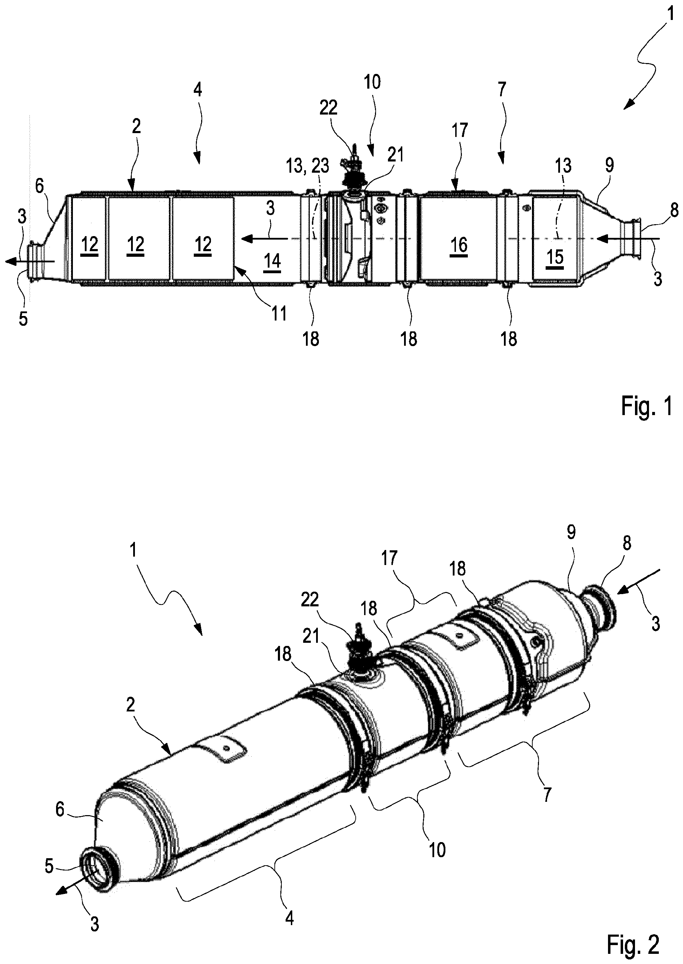

Entsprechend den Fig. 1 und 2 umfasst eine Abgasnachbehandlungseinrichtung 1, die sich für eine Verwendung in einer Abgasanlage einer Brennkraftmaschine eignet, ein rohrförmiges Gehäuse 2 zum Führen einer durch Pfeile angedeuteten Abgasströmung 3. Das Gehäuse 2 umfasst dabei einen Auslassabschnitt 4, der einen Auslass 5 an einem Auslasstrichter 6 aufweist, sowie einen Einlassabschnitt 7, der einen Einlass 8 an einem Einlasstrichter 9 aufweist. Zwischen Einlassabschnitt 7 und Auslassabschnitt 4 ist ein Injektionsabschnitt 10 angeordnet, der nachfolgend noch näher erläutert wird und der zum Einbringen eines Fluids, also einer Flüssigkeit oder eines Gases in die Abgasströmung 3 dient. Bezüglich der Strömungsrichtung der Abgasströmung 3 ist der Injektionsabschnitt 10 zwischen dem Auslassabschnitt 4 und dem Einlassabschnitt 7 angeordnet. Im Auslassabschnitt 4 ist ein SCR-Katalysator 11 angeordnet, der im Beispiel der Fig. 1 drei axial hintereinander angeordnete SCR-Elemente 12 aufweist. Die Axialrichtung bezieht sich dabei auf eine Längsmittelachse 13 des Gehäuses 2. Erkennbar ist zwischen dem SCR-Katalysator 11 und dem Injektionsabschnitt 10 ein Axialabstand vorgesehen, wodurch zwischen Injektionsabschnitt 10 und SCR-Katalysator 11 im Gehäuse 2 eine Beruhigungskammer 14 ausgebildet ist. Im Beispiel ist der Axialabstand zur Ausbildung der Beruhigungskammer 14 etwa gleich groß wie ein Durchmesser des im Querschnitt kreisförmigen Gehäuses 2. Im Einlassabschnitt 7 ist ein Oxidationskatalysator 15 angeordnet. Zwischen dem Injektionsabschnitt 10 und dem Oxidationskatalysator 15 ist außerdem ein Partikelfilter 16 im Einlassabschnitt 7 angeordnet. Die hier vorgestellte Abgasnachbehandlungseinrichtung 1 besitzt einen modularen Aufbau, der sich dadurch charakterisiert, dass der Injektionsabschnitt 10 und ein den Partikelfilter 16 beinhaltender Abschnitt 17 des Gehäuses 2 mit Hilfe von Schellenverbindungen 18 in das Gehäuse 2 eingebunden sind. Auf diese Weise ist es beispielsweise möglich, den mit dem Partikelfilter 16 ausgestatteten Abschnitt 17 zum Beispiel für Wartungszwecke quer zur Längsmittelachse 13 auszubauen oder sogar für eine andere Konfiguration der Abgasnachbehandlungseinrichtung 1 wegzulassen. Ebenso kann der Injektionsabschnitt 10 für Wartungszwecke quer zur Längsmittelachse 13 aus dem Gehäuse 2 ausgebaut werden.

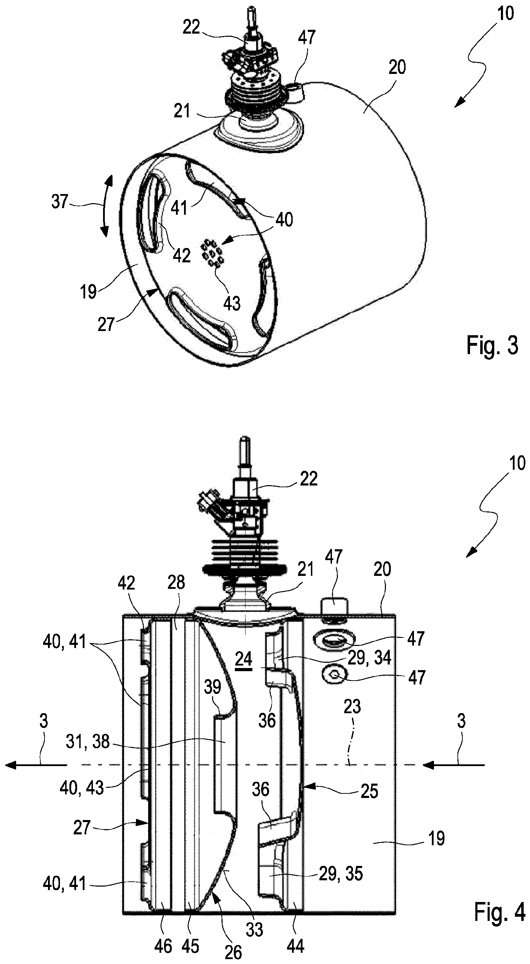

Wie sich insbesondere den Figuren 3 bis 5 entnehmen lässt, umfasst der Injektionsabschnitt 10 einen Kanal 19 zum Führen der Abgasströmung 3. Hierzu ist der Injektionsabschnitt 10 mit einem Rohrstück 20 ausgestattet. Der Injektionsabschnitt 10 ist zweckmäßig als separate Einheit konfiguriert und kann unabhängig von der übrigen Abgasnachbehandlungseinrichtung 1 vormontiert werden. In den Figuren 3 bis 5 sind Anschlusselemente, über welche der Injektionsabschnitt 10 an den Auslassabschnitt 4 bzw. an den Einlassabschnitt 7 angebaut werden kann, nicht dargestellt. Diese Anschlusselemente können beispielsweise Flansche zur Realisierung der vorstehend genannten Schellenverbindungen 18 sein.

Der Injektionsabschnitt 10 weist außerdem einen seitlich am Kanal 19 angeordneten Injektoranschluss 21 auf, an den ein Injektor 22 zum Einbringen eines Fluids, also einer Flüssigkeit oder eines Gases in die Abgasströmung 3 angeschlossen ist. Im gezeigten Beispiel ist der Injektor 22 so an den Injektoranschluss 21 angeschlossen, dass seine Injektionsrichtung im Wesentlichen senkrecht bzw. radial zu einer Längsmittelachse 23 des Kanals 19 orientiert ist. Die Längsmittelachse 23 des Kanals 19 fällt mit der Längsmittelachse 13 des Gehäuses 2 zusammen, wenn der Injektionsabschnitt 10 in das Gehäuse 2 eingebaut ist.

Im Kanal 19 ist im Bereich des Injektoranschlusses 21 eine Injektionskammer 24 ausgebildet. Die Injektionskammer 24 ist einerseits durch eine erste Trennwand 25, die im Kanal 19 bezüglich der Abgasströmung 3 stromauf angeordnet ist, und andererseits durch eine zweite Trennwand 26 begrenzt, die bezüglich der Abgasströmung 3 stromab im Kanal 19 angeordnet ist. Die erste Trennwand 25 und die zweite Trennwand 26 sind perforiert, so dass sie jeweils von Abgas durchströmbar sind. Im hier gezeigten, bevorzugten Beispiel ist außerdem stromab der zweiten Trennwand 26 eine dritte Trennwand 27 im Kanal 19 angeordnet, die zusammen mit der zweiten Trennwand 26 eine Umlenkkammer 28 begrenzt. Auch die dritte Trennwand 27 ist perforiert, so dass sie von Abgas durchströmbar ist.

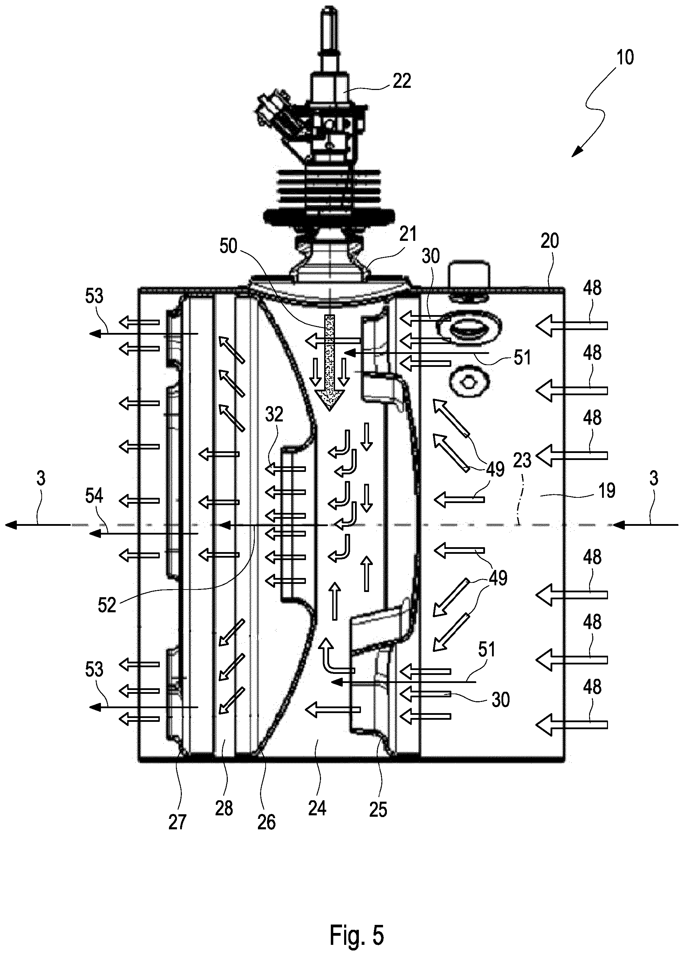

Die erste Trennwand 25 weist vorzugsweise eine Perforation 29 auf, die so ausgestaltet ist, dass die erste Trennwand 25 bezüglich der Längsmittelachse 23 ausschließlich exzentrisch von Abgas durchströmbar ist. Eine derartige, exzentrische Durchströmung der ersten Trennwand 25 ist in Figur 5 durch Pfeile 30 angedeutet. Ferner erfolgt die Durchströmung der ersten Trennwand 25 hier ausschließlich axial, also parallel zur Längsmittelachse 23. Dementsprechend tritt ein in Fig. 5 mit 51 bezeichneter eintretender Hauptteil der Abgasströmung 3 ausschließlich axial und exzentrisch in die Injektionskammer 24 ein. Im Beispiel mit ausschließlich exzentrischer Durchströmung der ersten Trennwand 25 entspricht der eintretende Hauptteil 51 der gesamten Abgasströmung 3.

Die zweite Trennwand 26 weist vorzugsweise eine Perforation 31 auf, die so ausgestaltet ist, dass die zweite Trennwand 26 bezüglich der Längsmittelachse 23 ausschließlich zentrisch von Abgas durchströmbar ist. Eine derartige zentrische Durchströmung der zweiten Trennwand 26 ist in Fig. 5 durch Pfeile 32 angedeutet. Ferner erfolgt die Durchströmung der zweiten Trennwand 26 hier ausschließlich axial, also parallel zur Längsmittelachse 23. Dementsprechend tritt ein in Fig. 5 mit 52 bezeichneter austretender Hauptteil der Abgasströmung 3 ausschließlich axial und exzentrisch aus der Injektionskammer 24 aus. Im Beispiel mit ausschließlich zentrischer Durchströmung der zweiten Trennwand 26 entspricht der austretende Hauptteil 52 der gesamten Abgasströmung 3.

Die exzentrische Perforation 29 der ersten Trennwand 25 und die zentrische Perforation 31 der zweiten Trennwand 26 sind hier vorzugsweise außerdem so aufeinander abgestimmt, dass sich in einer Axialprojektion, die parallel zur Längsmittelachse 23 orientiert ist, keine Überlappung zwischen diesen Perforationen 29, 31 ergibt. Dementsprechend ist die exzentrische Perforation 29 der ersten Trennwand 25 in der Axialprojektion vollständig außerhalb der zentrischen Perforation 31 der zweiten Trennwand 26 angeordnet.

Die zweite Trennwand 26 weist eine exzentrisch zur Längsmittelachse 23 angeordnete Prallfläche 33 auf, die axial fluchtend zur exzentrischen Perforation 29 der ersten Trennwand 25 angeordnet ist. Ferner ist die zweite Trennwand 26 zur ersten Trennwand 25 hin konvex gewölbt. In der Folge ist die Prallfläche 33 im Querschnitt gekrümmt. Außerdem erstreckt sich die Prallfläche 33 ringförmig geschlossen um die zentrale Perforation 31.

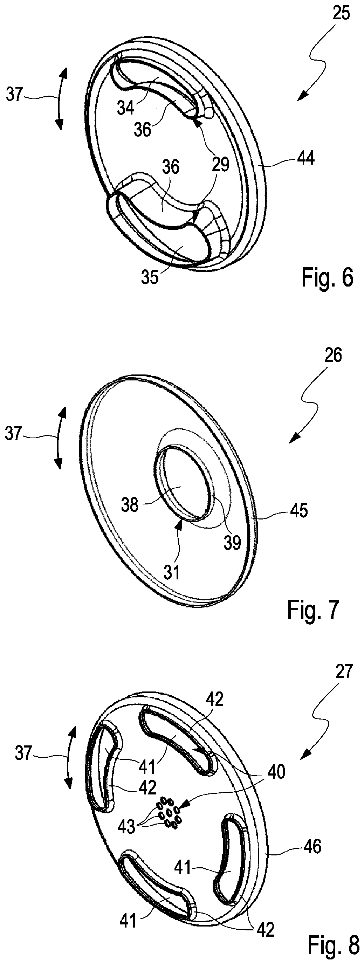

Gemäß den Figuren 4, 5 und 6 weist die exzentrische Perforation 29 der ersten Trennwand 25 im hier gezeigten Beispiel genau zwei exzentrisch angeordnete Öffnungen, nämlich eine erste exzentrische Öffnung 34 und eine zweite exzentrische Öffnung 35 auf. Die beiden Öffnungen 34, 35 sind an der ersten Trennwand 25 bezüglich der Längsmittelachse 23 diametral gegenüberliegend angeordnet. Der eintretende Hauptteil 51 der Abgasströmung 3 ist somit auf diese beiden exzentrischen Öffnungen 34, 35 aufgeteilt. Wie sich den Figuren 4 und 5 entnehmen lässt, liegen der Injektoranschluss 21 und die beiden exzentrischen Öffnungen 34, 35 der ersten Trennwand 25 in einer Längsmittelebene, in der auch die Längsmittelachse 23 liegt und die in den Figuren 4 und 5 der Schnittebene entspricht. Somit ist die erste Öffnung 34 proximal zum Injektoranschluss 21 angeordnet und wird im Folgenden auch als proximale Öffnung 34 bezeichnet. Die zweite Öffnung 35 ist dagegen distal zum Injektoranschluss 21 angeordnet und wird im Folgenden auch als distale Öffnung 35 bezeichnet. Die beiden exzentrischen Öffnungen 34, 35 besitzen bevorzugt jeweils einen in die Injektionskammer 24 vorstehenden Kragen 36. Außerdem sind beide Öffnungen 34, 35 als Langlöcher konfiguriert, deren Längsrichtung in der Umfangsrichtung 37 des Kanals 19 orientiert ist. Ferner lässt sich insbesondere Figur 6 entnehmen, dass die distale exzentrische Öffnung 35 einen signifikant größeren Öffnungsquerschnitt aufweist als die proximale exzentrische Öffnung 34. Beispielsweise ist der Öffnungsquerschnitt der distalen Öffnung 35 wenigstens doppelt so groß wie der Öffnungsquerschnitt der proximalen Öffnung 34. Schließlich lässt sich den Fig. 4 bis 6 entnehmen, dass eine parallel zur Längsmittelachse 23 des Kanals 19 gemessene Länge des Kragens 36 der distalen Öffnung 35 größer ist als die Länge des Kragens 36 der proximalen Öffnung 34, so dass der Kragen 36 der distalen Öffnung 35 tiefer in die Injektionskammer 24 hineinragt.

Wie sich den Figuren 4, 5 und 7 entnehmen lässt, weist die zentrale Perforation 31 der zweiten Trennwand 26 im gezeigten Beispiel nur eine einzige zentrisch oder zentral angeordnete Öffnung 38 auf, die im Folgenden auch als zentrale Öffnung 38 bezeichnet wird. Der austretende Hauptteil 52 der Abgasströmung 3 ist somit einteilig durch diese eine zentrale Öffnung 38 hindurch geführt. Die zentrale Öffnung 38 besitzt einen Öffnungsquerschnitt, der geometrisch ähnlich ist zum Querschnitt des Kanals 19. Der Kanal 19 ist hier zylindrisch, insbesondere kreiszylindrisch, geformt. Dementsprechend ist der Querschnitt der zentralen Öffnung 38 rund, insbesondere kreisförmig. Auch hier ist an der zweiten Trennwand 26 ein Kragen 39 ausgebildet, der die zentrale Öffnung 38 einfasst und dabei von der Injektionskammer 34 weg gerichtet absteht.

Wie sich den Figuren 3, 4, 5 und 8 entnehmen lässt, besitzt auch die dritte Trennwand 27 eine Perforation 40, die so ausgestaltet ist, dass die dritte Trennwand 27 bezüglich der Längsmittelachse 23 exzentrisch von Abgas durchströmbar ist. Hierzu umfasst die Perforation 40 der dritten Trennwand 27 mehrere exzentrisch angeordnete Öffnungen 41, die in der Umfangsrichtung 37 gleichmäßig verteilt angeordnet sind. Im Beispiel sind exakt vier derartige exzentrische Öffnungen 41 vorgesehen. Die exzentrischen Öffnungen 41 der dritten Trennwand 27 können ebenfalls jeweils mit einem von der Umlenkkammer 28 weg gerichtet abstehenden Kragen 42 eingefasst sein. Ebenso sind die exzentrischen Öffnungen 41 der dritten Trennwand 27 hier als sich in der Umfangsrichtung 37 erstreckende Langlöcher ausgebildet. Darüber hinaus ist die Perforation 40 der dritten Trennwand 27 so ausgestaltet, dass die dritte Trennwand 27 nicht nur exzentrisch, sondern auch zentrisch von Abgas durchströmbar ist. Hierzu besitzt die Perforation 40 der dritten Trennwand 27 im Beispiel der Fig. 3 und 8 mehrere zentrisch angeordnete Öffnungen 43, die im Vergleich zu den exzentrischen Öffnungen 41 jedoch deutlich kleinere Öffnungsquerschnitte besitzen. Auch sind hier bei den zentrischen Öffnungen 43 keine Kragen vorgesehen. Ferner sind die zentrischen Öffnungen 43 als kreisförmige Öffnungen konzipiert. Demnach ist die Perforation 40 der dritten Trennwand 27 so konfiguriert, dass ein die dritte Trennwand 27 zentrisch durchströmender Anteil der Abgasströmung 3 deutlich kleiner ist als ein die dritte Trennwand 27 exzentrisch durchströmender Anteil der Abgasströmung 3. Bei der hier gezeigten Ausführungsform tritt somit im Betrieb der Abgasnachbehandlungseinrichtung 1 gemäß Fig. 5 ein Hauptteil 53 der Abgasströmung 3 exzentrisch durch die exzentrischen Öffnungen 41 aus der Umlenkkammer 28 aus, während ein deutlich kleinerer Nebenteil 54 der Abgasströmung 3 zentrisch durch die zentrischen Öffnungen 43 aus der Umlenkkammer 28 austritt.

Wie sich den Figuren 3 bis 5 entnehmen lässt, enthält das Rohrstück 20 somit den Kanal 19, die Injektionskammer 24 und die Umlenkkammer 28. Ferner sind die erste Trennwand 25, die zweite Trennwand 26 und die dritte Trennwand 27 im Rohrstück 20 angeordnet und daran befestigt. Zweckmäßig weist hierzu die jeweilige Trennwand 25, 26, 27 einen axial abstehenden, ringförmig umlaufenden Kragen 44 bzw. 45 bzw. 46 auf, der radial an einer Innenseite des Rohrstücks 20 anliegt und damit beispielsweise verschweißt oder verlötet ist.

Ferner weist das Rohrstück 20 den Injektoranschluss 21 auf. Außerdem können weitere Anschlüsse 47 für Sensoren und dergleichen am Rohrstück 20 vorgesehen sein.

Der Injektionsabschnitt 10 funktioniert gemäß Fig. 5 wie folgt. Die Abgasströmung 3 wird gemäß Pfeilen 48 über den gesamten Querschnitt des Kanals 19 der ersten Trennwand 25 zugeführt. An der ersten Trennwand 25 erfolgt eine Umlenkung der Abgasströmung 3 gemäß Pfeilen 49 auf die exzentrische Perforation 29 der ersten Trennwand 25. Hierdurch wird eine exzentrische Durchströmung der ersten Trennwand 25 gemäß Pfeilen 30 erzeugt, die in die Injektionskammer 24 einströmt. Dabei trifft die Abgasströmung auf die Prallwand 33, welche die Strömung radial nach außen ablenkt. Durch die beiden diametral gegenüberliegenden exzentrischen Öffnungen 34, 35 der exzentrischen Perforation 29 der ersten Trennwand 25 erfolgt außerdem eine Strömungsumlenkung in Umfangsrichtung 37. Hierdurch ergibt sich eine intensive Verwirbelung innerhalb der Injektionskammer 24. Mit Hilfe des Injektors 22 wird gemäß Pfeilen 50 das jeweilige Fluid, vorzugsweise eine wässrige Harnstofflösung, in die Injektionskammer 24 eingespritzt. Diese Einspritzung erfolgt üblicherweise in Form eines Sprühkegels, der in Einspritzrichtung divergiert. Eine Haupteinspritzrichtung kann dabei radial auf die Längsmittelachse 23 ausgerichtet sein. Schließlich bildet sich im Zentrum der Injektionskammer 24 eine zentrale Auslassströmung gemäß Pfeilen 32, die durch die zentrische Perforation 31 der zweiten Trennwand 26 in die Umlenkkammer 28 gelangt. In der Umlenkkammer 28 erfolgt eine erneute Strömungsumlenkung bzw. Aufteilung auf die exzentrisch angeordneten Öffnungen 41 und die zentrisch angeordneten Öffnungen 43. Somit erfolgt innerhalb der Umlenkkammer 28 eine weitere intensive Durchmischung.

Im Beispiel der Fig. 1 kann in der auf die dritte Trennwand 27 folgenden Beruhigungskammer 14 eine Homogenisierung der Abgasströmung 3 über den gesamten Strömungsquerschnitt des Gehäuses 2 stattfinden, bevor die Abgasströmung 3 in den SCR-Katalysator 11 eintritt.

## Patentansprüche

1. Injektionsabschnitt für eine Abgasanlage einer Brennkraftmaschine,
- mit einem Kanal (19) zum Führen einer Abgasströmung (3),
- mit einem seitlich am Kanal (19) angeordneten Injektoranschluss (21), an den ein Injektor (22) zum Einbringen eines Fluids in die Abgasströmung (3) anschließbar ist,
- mit einer im Kanal (19) im Bereich des Injektoranschlusses (21) ausgebildeten Injektionskammer (24), die einerseits durch eine bezüglich der Abgasströmung (3) stromauf des Injektoranschlusses (21) im Kanal (19) angeordnete, perforierte und von Abgas durchströmbare erste Trennwand (25) und andererseits durch eine bezüglich der Abgasströmung (3) stromab des Injektoranschlusses (21) im Kanal (19) angeordnete, perforierte und von Abgas durchströmbare zweite Trennwand (26) begrenzt ist,
- wobei eine Perforation (29) der ersten Trennwand (25) so ausgestaltet ist, dass die erste Trennwand (25) bezüglich einer Längsmittelachse (23) des Kanals (19) bevorzugt oder ausschließlich exzentrisch von Abgas durchströmbar ist, so dass ein eintretender Hauptteil (51) der Abgasströmung (3) exzentrisch in die Injektionskammer (24) eintritt,
- wobei eine Perforation (31) der zweiten Trennwand (26) so ausgestaltet ist, dass die zweite Trennwand (26) bezüglich der Längsmittelachse (23) des Kanals (19) bevorzugt oder ausschließlich zentrisch von Abgas durchströmbar ist, so dass ein austretender Hauptteil (52) der Abgasströmung (3) zentrisch aus der Injektionskammer (24) austritt,
**dadurch gekennzeichnet,**
**dass** die Perforationen (29, 31) der ersten und zweiten Trennwand (25, 26) so aufeinander abgestimmt sind, dass die Abgasströmung (3) in der Injektionskammer (24) bezüglich der Längsmittelachse (23) des Kanals (19) drallfrei ist.

2. Injektionsabschnitt nach Anspruch 1,
**dadurch gekennzeichnet,**
**dass** die Perforation (29) der ersten Trennwand (25) so ausgestaltet ist, dass die erste Trennwand (25) bezüglich der Längsmittelachse (23) des Kanals (19) bevorzugt oder ausschließlich axial von Abgas durchströmbar ist, so dass der eintretende Hauptteil (51) der Abgasströmung (3) exzentrisch und axial in die Injektionskammer (24) eintritt.

3. Injektionsabschnitt nach Anspruch 1 oder 2,
**dadurch gekennzeichnet,**
**dass** die Perforation (31) der zweiten Trennwand (26) so ausgestaltet ist, dass die zweite Trennwand (26) bezüglich der Längsmittelachse (23) des Kanals (19) bevorzugt oder ausschließlich axial von Abgas durchströmbar ist, so dass der austretende Hauptteil (52) der Abgasströmung (3) zentrisch und axial aus der Injektionskammer (24) austritt.

4. Injektionsabschnitt nach einem der Ansprüche 1 bis 3,
**dadurch gekennzeichnet,**
**dass** die exzentrische Perforation (29) der ersten Trennwand (25) in einer Projektion parallel zur Längsmittelachse (23) des Kanals (19) vollständig außerhalb der zentrischen Perforation (31) der zweiten Trennwand (26) angeordnet ist.

5. Injektionsabschnitt nach einem der Ansprüche 1 bis 4,
**dadurch gekennzeichnet,**
**dass** die zweite Trennwand (26) axial fluchtend zur Perforation (29) der ersten Trennwand (25) eine exzentrisch zur Längsmittelachse (23) des Kanals (19) angeordnete Prallfläche (33) aufweist.

6. Injektionsabschnitt nach einem der Ansprüche 1 bis 5,
**dadurch gekennzeichnet,**
**dass** die zweite Trennwand (26) zur ersten Trennwand (25) hin konvex gewölbt ist.

7. Injektionsabschnitt nach einem der Ansprüche 1 bis 6,
**dadurch gekennzeichnet,**
**dass** die Perforation (29) der ersten Trennwand (25) wenigstens eine exzentrisch angeordnete Öffnung (34, 35) aufweist, die von einem in die Injektionskammer (24) vorstehenden Kragen (36) eingefasst ist.

8. Injektionsabschnitt nach einem der Ansprüche 1 bis 7,
**dadurch gekennzeichnet,**
**dass** die Perforation (29) der ersten Trennwand (25) wenigstens eine exzentrisch angeordnete Öffnung (34, 35) aufweist, die als sich in Umfangsrichtung (37) des Kanals (19) erstreckendes Langloch ausgestaltet ist.

9. Injektionskammer nach einem der Ansprüche 1 bis 8,
**dadurch gekennzeichnet,**
**dass** die Perforation (29) der ersten Trennwand (25) nur durch zwei exzentrisch angeordnete Öffnungen gebildet ist, nämlich durch eine erste Öffnung (34) und eine zweite Öffnung (35), die der ersten Öffnung (34) bezüglich der Längsmittelachse (23) diametral gegenüberliegt, wobei die erste Öffnung (34) proximal zum Injektoranschluss (21) angeordnet sein kann, während die zweite Öffnung (35) distal zum Injektoranschluss (21) angeordnet sein kann.

10. Injektionsabschnitt nach einem der Ansprüche 1 bis 9,
**dadurch gekennzeichnet,**
- **dass** die Perforation (31) der zweiten Trennwand (26) wenigstens eine zentral angeordnete Öffnung (38) aufweist, die von einem von der Injektionskammer (24) weg gerichtet abstehenden Kragen (39) eingefasst ist, und/oder
- **dass** die Perforation (31) der zweiten Trennwand (26) nur durch eine einzige, zentrisch angeordnete zentrale Öffnung (38) gebildet ist.

11. Injektionsabschnitt nach einem der Ansprüche 1 bis 10,
**dadurch gekennzeichnet,**
**dass** im Kanal (19) bezüglich der Abgasströmung (3) stromab der Injektionskammer (24) eine Umlenkkammer (28) ausgebildet ist, die einerseits durch die zweite Trennwand (26) und durch eine im Kanal (19) angeordnete, perforierte und von Abgas durchströmbare dritte Trennwand (27) begrenzt ist.

12. Injektionsabschnitt nach Anspruch 11,
**dadurch gekennzeichnet,**
- **dass** eine Perforation (40) der dritten Trennwand (27) so ausgestaltet ist, dass die dritte Trennwand (27) bezüglich der Längsmittelachse (23) des Kanals (19) exzentrisch von Abgas durchströmbar ist,
- **dass** die Perforation (40) der dritten Trennwand (27) wenigstens eine exzentrisch angeordnete Öffnung (41) aufweist, die optional einen von der Umlenkkammer (28) weg gerichtet abstehenden Kragen (42) aufweisen kann und/oder die optional als sich in Umfangsrichtung (37) des Kanals (19) erstreckendes Langloch ausgestaltet sein kann.

13. Injektionsabschnitt nach Anspruch 11 oder 12,
**dadurch gekennzeichnet,**
**dass** die Perforation (40) der dritten Trennwand (27) außerdem so ausgestaltet ist, dass die dritte Trennwand (27) bezüglich der Längsmittelachse (23) des Kanals (19) zentrisch von Abgas durchströmbar ist, wobei ein die dritte Trennwand (27) zentrisch durchströmender Anteil der Abgasströmung (3) kleiner ist als ein die dritte Trennwand (27) exzentrisch durchströmender Anteil der Abgasströmung (3).

14. Injektionsabschnitt nach einem der Ansprüche 1 bis 13,
**dadurch gekennzeichnet,**
**dass** ein Rohrstück (20) vorgesehen ist, das den Kanal (19) und die Injektionskammer (24) enthält, das den Injektoranschluss (21) aufweist und das bezüglich einer Abgasnachbehandlungseinrichtung (1), in die der Injektionsabschnitt (10) eingebaut werden kann, ein separates Bauteil ist, so dass der Injektionsabschnitt (10) eine bezüglich der Abgasnachbehandlungseinrichtung (1) separate Einheit bildet.

15. Abgasnachbehandlungseinrichtung für eine Abgasanlage einer Brennkraftmaschine,
- mit einem rohrförmigen Gehäuse (2) zum Führen einer Abgasströmung (3), das in einem Auslassabschnitt (4) einen SCR-Katalysator (11) enthält,
- mit einem Injektionsabschnitt (10) nach einem der vorangehenden Ansprüche, der bezüglich der Abgasströmung (3) stromauf des SCR-Katalysators (11) angeordnet ist.

## Claims

1. An injection section for an exhaust system of an internal combustion engine,
- with a channel (19) for conducting an exhaust gas flow (3),
- with an injector connection (21) arranged laterally on the channel (19), on which an injector (22) for introducing a fluid into the exhaust gas flow (3) can be connected,
- with an injection chamber (24) formed in the channel (19) in the region of the injector connection (21), which on the one side is delimited by a perforated separating wall (25) that can be flowed through by exhaust gas and which with respect to the exhaust gas flow (3) is arranged in the channel (19) upstream of the injector connection (21) and on the other side by a perforated second separating wall (26) through which exhaust gas can flow and which with respect to the exhaust gas flow (3) is arranged in the channel (19) downstream of the injector connection (21),
- wherein a perforation (29) of the first separating wall (25) is configured so that the first separating wall (25) with respect to a longitudinal centre axis (23) of the channel (19) can be flowed through by exhaust gas preferably or exclusively eccentrically, so that an entering main part (51) of the exhaust gas flow (3) eccentrically enters the injection chamber (24),
- wherein a perforation (31) of the second separating wall (26) is configured so that the second separating wall (26) with respect to the longitudinal centre axis (23) of the channel (19) can be flowed through by exhaust gas preferably or exclusively concentrically, so that an exiting main part (52) of the exhaust gas flow (3) concentrically exits the injection chamber (24),
**characterized**
**in that** the perforations (29, 31) of the first and second separating wall (25, 26) are adjusted to each other in such a way that the exhaust flow (3) in the injection chamber (24) is non-rotational with respect to the longitudinal centre axis (23) of the channel (19).

2. The injection section according to Claim 1,
**characterized**
**in that** the perforation (29) of the first separating wall (25) is configured so that the first separating wall (25) with respect to the longitudinal centre axis (23) of the channel (19) can be flowed through by exhaust gas preferably or exclusively axially, so that the entering main part (51) of the exhaust gas flow (3) eccentrically and axially enters the injection chamber (24).

3. The injection section according to Claim 1 or 2,
**characterized**
**in that** the perforation (31) of the second separating wall (26) is configured so that the second separating wall (26) with respect to the longitudinal centre axis (23) of the channel (19) can be flowed through by exhaust gas preferably or exclusively axially so that the exiting main part (52) of the exhaust gas flow (3) concentrically and axially exits the injection chamber (24).

4. The injection section according to any one of the Claims 1 to 3,
**characterized**
**in that** the eccentric perforation (29) of the first separating wall (25), in a projection parallel to the longitudinal centre axis (23) of the channel (19), is completely arranged outside the concentric perforation (31) of the second separating wall (26).

5. The injection section according to any one of the Claims 1 to 4, **characterized in that** the second separating wall (26), axially aligned with respect to the perforation (29) of the first separating wall (25), comprises a baffle surface (33) that is eccentrically arranged with respect to the longitudinal centre axis (23) of the channel (19).

6. The injection section according to any one of the Claims 1 to 5, **characterized in that** the second separating wall (26) is convexly curved towards the first separating wall (25).

7. The injection section according to any one of the Claims 1 to 6,
**characterized**
**in that** the perforation (29) of the first separating wall (25) comprises at least one eccentrically arranged opening (34, 35) which is enclosed by a collar (36) projecting into the injection chamber (24).

8. The injection section according to any one of the Claims 1 to 7,
**characterized**
**in that** the perforation (29) of the first separating wall (25) comprises at least one eccentrically arranged opening (34, 35), which is configured as an elongated hole extending in circumferential direction (37) of the channel (19).

9. The injection section according to any one of the Claims 1 to 8,
**characterized**
**in that** the perforation (29) of the first separating wall (25) is only formed by two eccentrically arranged openings, namely by a first opening (34) and a second opening (35), which, with respect to the longitudinal centre axis (23), is located diametrically opposite the first opening (34), wherein the first opening (34) can be arranged proximally with respect to the injection connection (21) while the second opening (35) can be arranged distally with respect to the injection connection (21).

10. The injection section according to any one of the Claims 1 to 9,
**characterized**
- **in that** the perforation (31) of the second separating wall (26) comprises at least one centrally arranged opening (38), which is enclosed by a projecting collar (39) that is orientated away from the injection chamber (24), and/or
- **in that** the perforation (31) of the second separating wall (26) is only formed by a single concentrically arranged central opening (38).

11. The injection section according to any one of the Claims 1 to 10,
**characterized**
**in that** in the channel (19) with respect to the exhaust gas flow (3) downstream of the injection chamber (24) a deflection chamber (28) is formed, which on the one side is delimited by the second separating wall (26) and by a perforated third separating wall (27) through which exhaust gas can flow and which is arranged in the channel (19).

12. The injection section according to Claim 11,
**characterized**
- **in that** a perforation (40) of the third separating wall (27) is configured so that the third separating wall (27) with respect to the longitudinal centre axis (23) of the channel (19) can be flowed through by exhaust gas eccentrically,
- **in that** the perforation (40) of the third separating wall (27) comprises at least one eccentrically arranged opening (41), which can optionally comprise a projecting collar (42) orientated away from the deflection chamber (28) and/or which can optionally be configured as an elongated hole extending in circumferential direction (37) of the channel (19).

13. The injection section according to Claim 11 or 12,
**characterized**
**in that** the perforation (40) of the third separating wall (27) is additionally configured so that the third separating wall (27) with respect to the longitudinal centre axis (23) of the channel (19) can be concentrically flowed through by exhaust gas, wherein a part of the exhaust gas flow (3) which concentrically flows through the third separating wall (27) is smaller than a part of the exhaust gas flow (3) eccentrically flowing through the third separating wall (27).

14. The injection section according to any one of the Claims 1 to 13,
**characterized**
**in that** a pipe piece (20) is provided, which contains the channel (19) and the injection chamber (24), which comprises the injector connection (21) and which with respect to an exhaust gas aftertreatment device (1), in which the injection section (10) can be installed, is a separate component so that the injection section (10) forms a unit that is separate with respect to the exhaust gas aftertreatment device (1).

15. An exhaust gas aftertreatment device for an exhaust system of an internal combustion engine,
- with a tubular housing (2) for conducting an exhaust gas flow (3), which in an outlet section (4) contains an SCR-catalytic converter (11),
- with an injection section (10) according to any one of the preceding claims, which with respect to the exhaust gas flow (3) is arranged upstream of the SCR-catalytic converter (11).

## Revendications

1. Section d'injection pour un système de gaz d'échappement d'un moteur à combustion interne,
- avec un canal (19) destiné à guider un flux de gaz d'échappement (3),
- avec un raccord d'injecteur (21) qui est agencé latéralement au niveau du canal (19) et auquel un injecteur (22) destiné à introduire un fluide dans le flux de gaz d'échappement (3) peut être raccordé,
- avec une chambre d'injection (24) qui est conçue dans le canal (19) dans la zone du raccord d'injecteur (21) et qui est limitée d'un côté par une première paroi séparatrice (25) agencée dans le canal (19) en amont du raccord d'injecteur (21) par rapport au flux de gaz d'échappement (3), perforée et pouvant être traversée par du gaz d'échappement et d'un autre côté par une deuxième paroi séparatrice (26) agencée dans le canal (19) en aval du raccord d'injecteur (21) par rapport au flux de gaz d'échappement (3), perforée et pouvant être traversée par du gaz d'échappement,
- dans laquelle une perforation (29) de la première paroi séparatrice (25) est conçue de telle sorte que la première paroi séparatrice (25) est traversée par du gaz d'échappement de préférence ou exclusivement de manière excentrée par rapport à un axe médian longitudinal (23) du canal (19) de telle sorte qu'une majeure partie entrante (51) du flux de gaz d'échappement (3) entre de manière excentrée dans la chambre d'injection (24),
- dans laquelle une perforation (31) de la deuxième paroi séparatrice (26) est conçue de telle sorte que la deuxième paroi séparatrice (26) est traversée par du gaz d'échappement de préférence ou exclusivement de manière centrée par rapport à un axe médian longitudinal (23) du canal (19) de telle sorte qu'une majeure partie sortante (52) du flux de gaz d'échappement (3) sort de manière centrée de la chambre d'injection (24),
**caractérisée en ce que** les perforations (29, 31) de la première et de la deuxième paroi séparatrice (25, 26) sont adaptées l'une à l'autre de telle sorte que le flux de gaz d'échappement (3) dans la chambre d'injection (24) est sans rotation par rapport à l'axe médian longitudinal (23) du canal (19).

2. Section d'injection selon la revendication 1, **caractérisée en ce que** la perforation (29) de la première paroi séparatrice (25) est conçue de telle sorte que la première paroi séparatrice (25) peut être traversée par du gaz d'échappement de préférence ou exclusivement de manière axiale par rapport à l'axe médian longitudinal (23) du canal (19) de telle sorte que la majeure partie entrante (51) du flux de gaz d'échappement (3) entre de manière excentrée et axiale dans la chambre d'injection (24).

3. Section d'injection selon la revendication 1 ou 2, **caractérisée en ce que** la perforation (31) de la deuxième paroi séparatrice (26) est conçue de telle sorte que la deuxième paroi séparatrice (26) peut être traversée par du gaz d'échappement de préférence ou exclusivement de manière axiale par rapport à l'axe médian longitudinal (23) du canal (19) de telle sorte que la majeure partie sortante (52) du flux de gaz d'échappement (3) sort de manière centrée et axiale de la chambre d'injection (24).

4. Section d'injection selon l'une des revendications 1 à 3, **caractérisée en ce que** la perforation excentrée (29) de la première paroi séparatrice (25) est agencée, dans une projection parallèlement à l'axe médian longitudinal (23) du canal (19), complètement à l'extérieur de la perforation centrée (31) de la deuxième paroi séparatrice (26).

5. Section d'injection selon l'une des revendications 1 à 4, **caractérisée en ce que** la deuxième paroi séparatrice (26) comporte, alignée axialement sur la perforation (29) de la première paroi séparatrice (25), une surface de rebondissement (33) agencée de manière excentrée par rapport à l'axe médian longitudinal (23) du canal (19).

6. Section d'injection selon l'une des revendications 1 à 5, **caractérisée en ce que** la deuxième paroi séparatrice (26) est convexe par rapport à la première paroi séparatrice (25).

7. Section d'injection selon l'une des revendications 1 à 6, **caractérisée en ce que** la perforation (29) de la première paroi séparatrice (25) comporte au moins une ouverture (34, 35) qui est agencée de manière excentrée et qui est bordée par un collet (36) dépassant dans la chambre d'injection (24).

8. Section d'injection selon l'une des revendications 1 à 7, **caractérisée en ce que** la perforation (29) de la première paroi séparatrice (25) comporte au moins une ouverture (34, 35) qui est agencée de manière excentrée et qui est conçue comme un trou oblong s'étendant dans la direction circonférentielle (37) du canal (19).

9. Section d'injection selon l'une des revendications 1 à 8, **caractérisée en ce que** la perforation (29) de la première paroi séparatrice (25) est formée seulement par deux ouvertures agencées de manière excentrée, à savoir par une première ouverture (34) et par une deuxième ouverture (35) qui est diamétralement opposée à la première ouverture (34) par rapport à l'axe longitudinal médian (23), la première ouverture (34) pouvant être agencée de manière proximale par rapport au raccord d'injecteur (21) tandis que la deuxième ouverture (35) peut être agencée de manière distale par rapport au raccord d'injecteur (21).

10. Section d'injection selon l'une des revendications 1 à 9, **caractérisée en ce que**
- la perforation (31) de la deuxième paroi séparatrice (26) comporte au moins une ouverture (38) qui est agencée de manière centrée et qui est bordée par un collet (39) s'éloignant de la chambre d'injection (24), et/ou
- la perforation (31) de la deuxième paroi séparatrice (26) est formée seulement par une unique ouverture centrale (38) agencée de manière centrée.

11. Section d'injection selon l'une des revendications 1 à 10, **caractérisée en ce qu'**il est prévu dans le canal (19), en aval de la chambre d'injection (24) par rapport au flux de gaz d'échappement (3), une chambre de déviation (28) qui est limitée d'un côté par la deuxième paroi séparatrice (26) et d'un autre côté par une troisième paroi séparatrice (27) agencée dans le canal (19), perforée et pouvant être traversée par du gaz d'échappement.

12. Section d'injection selon la revendication 11, **caractérisée en ce que**
- une perforation (40) de la troisième paroi séparatrice (27) est conçue de telle sorte que la troisième paroi séparatrice (27) peut être traversée par du gaz d'échappement de manière excentrée par rapport à l'axe médian longitudinal (23) du canal (19),
- la perforation (40) de la troisième paroi séparatrice (27) comporte au moins une ouverture (41) qui est agencée de manière excentrée et qui peut comporter en option un collet (42) s'éloignant de la chambre de déviation (28) et/ou qui peut être conçue en option comme un trou oblong s'étendant dans la direction circonférentielle (37) du canal (19).

13. Section d'injection selon la revendication 11 ou 12, **caractérisée en ce que** la perforation (40) de la troisième paroi séparatrice (27) est conçue en outre de telle sorte que la troisième paroi séparatrice (27) peut être traversée par du gaz d'échappement de manière centrée par rapport à l'axe médian longitudinal (23) du canal (19), une part du flux de gaz d'échappement (23) qui traverse de manière centrée la troisième paroi séparatrice (27) étant inférieure à une part du flux de gaz d'échappement (3) qui traverse de manière excentrée la troisième paroi séparatrice (27).

14. Section d'injection selon l'une des revendications 1 à 13, **caractérisée en ce qu'**il est prévu une pièce tubulaire (20) qui contient le canal (19) et la chambre d'injection (24), qui comporte le raccord d'injecteur (21) et qui est une pièce séparée par rapport à un dispositif de post-traitement de gaz d'échappement (1) dans lequel la section d'injection (10) peut être montée de telle sorte que la section d'injection (10) forme une unité séparée par rapport à un dispositif de post-traitement de gaz d'échappement (1).

15. Dispositif de post-traitement de gaz d'échappement pour un système de gaz d'échappement d'un moteur à combustion interne,
- avec un carter tubulaire (2) destiné à guider un flux de gaz d'échappement (3), qui contient un catalyseur RCS (11) dans une section de sortie (4),
- avec une section d'injection (10) selon l'une des revendications précédentes, qui est agencée en amont du catalyseur RCS (11) par rapport au flux de gaz d'échappement (3).
